# EUROPÄISCHE PATENTSCHRIFT

(11) **EP 3 157 460 B1**
(45) Veröffentlichungstag und Bekanntmachung des Hinweises auf die Patenterteilung: **21.10.2020**
(21) Anmeldenummer: 15730137.5
(22) Anmeldetag: 17.06.2015
(51) Int. Cl.: A61C 13/01, A61C 13/10

(54) **PROTHESENBASIS SOWIE VERFAHREN ZUR STOFFSCHLÜSSIGEN VERBINDUNG MINDESTENS EINES KÜNSTLICHEN ZAHNS MIT EINER PROTHESENBASIS**
PROSTHESIS BASE AND METHOD FOR INTEGRALLY BONDING AT LEAST ONE ARTIFICIAL TOOTH TO A PROSTHESIS BASE
BASE DE PROTHÈSE ET PROCÉDÉ POUR RELIER PAR LIAISON DE MATIÈRE AU MOINS UNE DENT ARTIFICIELLE À UNE BASE DE PROTHÈSE

(30) Priorität: 18.06.2014 DE 102014108632
(43) Veröffentlichungstag der Anmeldung: 26.04.2017
(73) Patentinhaber: Kulzer GmbH, 63450 Hanau (DE)
(72) Erfinder: SAVIC, Novica, 63526 Erlensee (DE); RENZ, Karl-Heinz, 63755 Alzenau (DE); GALL, Silke Maren, 63755 Alzenau (DE)
(74) Vertreter: Bendele, Tanja
(86) Internationale Anmeldenummer: PCT/EP2015/063571
(87) Internationale Veröffentlichungsnummer: WO 2015/193362

(56) Entgegenhaltungen:
- WO-A1-2014/134640
- US-A1- 2010 086 899
- US-A1- 2012 052 465
- US-A1- 2014 106 303
- US-A1- 2014 127 642

## Beschreibung

Die Erfindung betrifft eine Prothesenbasis, die ganz oder teilweise aus einem Prothesenwerkstoff und/oder aus Wachs gefertigt ist und auf ihrer Oberseite mindestens eine im Wesentlichen passgenaue Ausnehmung zur bereichsweisen Aufnahme eines künstlichen Zahns besitzt. Ferner betrifft die Erfindung ein Verfahren zur stoffschlüssigen Verbindung eines künstlichen Zahns mit einer solchen Prothesenbasis.

Die vorgeschlagene Prothesenbasis ist insbesondere zur Durchführung des vorgeschlagenen Verfahrens geeignet.

Das vorgeschlagene Verfahren gelangt vorzugsweise in einem Verfahren zur Herstellung einer Teil- oder Totalprothese zur Anwendung. Es kann der finalen Verbindung mindestens eines künstlichen Zahns mit einer Prothesenbasis aus einem Prothesenwerkstoff oder der temporären Verbindung mindestens eines künstlichen Zahns mit einer Wachsbasis dienen, um beispielsweise ein Wachsmodell der späteren Prothese zu erstellen oder eine Zahnaufstellung in Wachs vorzunehmen.

Die Herstellung einer Zahnaufstellung in Wachs stellt einen Zwischenarbeitsschritt in einem Verfahren zur Herstellung einer Teil- oder Totalprothese dar. Sie dient der genauen Positionierung der Zähne, um später die Kaufunktion zu erzielen, die klinisch notwendig ist. Zur Fertigstellung der Prothese wird dann das Wachs gegen einen Prothesenwerkstoff ausgetauscht. Dies kann in der Weise erfolgen, dass die Wachsaufstellung in ein aushärtbares Abformmaterial, beispielsweise Gips, eingebettet und die Prothesenbasis aus Wachs als Wachsmodell (in Form der Prothesenbasis aus Prothesenwerkstoff) nach dem Aushärten des Abformmaterials durch Ausbrühen mit heißem Wasser entfernt wird. Anschließend wird der verbleibende Hohlraum mit dem eigentlichen Prothesenmaterial zur Herstellung der Prothesenbasis gefüllt. Nach dem Aushärten des Prothesenmaterials zum Prothesenwerkstoff ist die erforderliche Verbindung der künstlichen Zähne mit der Prothesenbasis hergestellt. Eine Zahnaufstellung in Wachs kommt insbesondere bei der traditionellen Prothesenherstellung zum Einsatz. Die Wachsbasis wird dann auf der Grundlage eines Abdrucks der Mundsituation eines Patienten gefertigt.

Darüber hinaus sind Verfahren zur Prothesenherstellung bekannt, bei denen die Zahnaufstellung nur noch virtuell vorgenommen wird. Solche Verfahren werden beispielhaft in der DE 103 04 757 B4 und der DE 10 2009 037 916 A1 beschrieben. Zunächst wird die Mundsituation des Patienten gescannt und ein virtuelles Modell erstellt. In dieses Modell werden - virtuell - die künstlichen Zähne eingepasst, die zuvor ebenfalls gescannt wurden oder bereits als Datensatz vorliegen. Auf der Grundlage der digitalen Daten der virtuellen Zahnaufstellung kann dann mittels Rapid-Manufacturing oder Rapid-Prototyping ein Funktionsmodell einer Prothesenbasis hergestellt werden, das bereits passgenaue Ausnehmungen zur Aufnahme der künstlichen Zähne besitzt. Das Funktionsmodell wird zur Herstellung einer Negativform genutzt, in welche der Prothesenwerkstoff zur Herstellung der endgültigen Prothesenbasis gegeben wird. Entsprechend dem Funktionsmodell besitzt auch die Prothesenbasis passgenaue Ausnehmungen zur Aufnahme der künstlichen Zähne, so dass diese nur noch eingesteckt und mit der Prothesenbasis verbunden werden müssen.

Das Dokument US2012/0052465 A1 offenbart ein Dentalmodell und Verfahren zu seiner Herstellung.

Das Dokument US2010/0086899 A1 offenbart ein Verfahren zur Modellierung und Herstellung eines künstlichen Gebisses.

Die Verbindung der künstlichen Zähne mit der Prothesenbasis wird in der Regel unter Verwendung eines Klebers hergestellt. Dies setzt jedoch voraus, dass in den Ausnehmungen der Prothesenbasis ausreichend Raum zur Aufnahme des Klebers vorhanden ist. Ist dies nicht der Fall müssen die künstlichen Zähne gekürzt bzw. von unten, d. h. basal, angeschliffen werden. Dies kann dazu führen, dass die Zähne nicht mehr in die jeweiligen Ausnehmungen der Prothesenbasis passen und eine weitere Nachbearbeitung der künstlichen Zähne und/oder der Prothesenbasis vorgenommen werden muss.

Um dies zu verhindern, kann auf der Grundlage der digitalen Daten einer virtuellen Zahnaufstellung zunächst eine Prothesenbasis aus Wachs hergestellt werden. In die Wachsbasis werden dann die konfektionierten künstlichen Zähne eingesetzt. Die virtuelle Zahnaufstellung wird auf diese Weise in eine reale überführt. Zur Fertigstellung der Prothese muss dann nur noch das Wachs gegen das eigentliche Prothesenmaterial ausgetauscht werden. Hierbei kann wie bereits zuvor in Zusammenhang mit dem traditionellen Verfahren beschrieben vorgegangen werden.

Wird zunächst ein Wachsmodell der eigentlichen Prothesenbasis geschaffen, müssen auch hier die künstlichen Zähne mit der Wachsbasis verbunden werden. Idealerweise erfolgt dies durch Anschmelzen des Wachses und Einsetzen der Zähne in das angeschmolzene Wachs. Nach Wiedererstarren des Wachses ist eine feste Verbindung gegeben. Handelsüblicher Aufstell- oder Basisplattenwachs weist jedoch den Nachteil auf, dass er beim Anschmelzen schnell in einen flüssigen Zustand übertritt. Wird der Wachs nicht nur angeschmolzen, sondern vollständig aufgeschmolzen, d. h. verflüssigt, können Formveränderungen auftreten, die zu einer Abweichung des realen Modells vom virtuellen Modell führen. Die Passgenauigkeit der zur Aufnahme der künstlichen Zähne vorgesehenen Ausnehmungen ist dann nicht mehr gewährleistet.

Das Verbinden eines künstlichen Zahns mit einer Prothesenbasis in einem Verfahren zur Herstellung einer Teil- oder Totalprothese stellt einen schwierig umzusetzenden Arbeitsschritt dar, und zwar unabhängig davon, ob der Zahn mit einer Prothesenbasis aus einem Prothesenwerkstoff zur Herstellung der fertigen Prothese oder mit einer Wachsbasis zur Herstellung eines vorläufigen Wachsmodells verbunden werden soll.

Der vorliegenden Erfindung liegt daher die Aufgabe zugrunde, das Verbinden eines künstlichen Zahns mit einer Prothesenbasis zu vereinfachen.

Zur Lösung der Aufgabe werden die Prothesenbasis mit den Merkmalen des Anspruchs 1 und das Verfahren mit den Merkmalen des Anspruchs 7 vorgeschlagen. Vorteilhafte Ausgestaltungen der Erfindung sind den jeweiligen Unteransprüchen zu entnehmen.

Die vorgeschlagene Prothesenbasis ist, insbesondere ganz oder teilweise aus einem Prothesenwerkstoff und/oder aus Wachs gefertigt, und besitzt auf ihrer Oberseite mindestens eine im Wesentlichen passgenaue Ausnehmung zur bereichsweisen Aufnahme eines künstlichen Zahns. Erfindungsgemäß ist in der Prothesenbasis mindestens ein Kanal ausgebildet, der in die Ausnehmung mündet und der Kanal zumindest im Bereich seiner Mündung in die Ausnehmung eine Aufweitung besitzt, wobei a) der Kanal, vorzugsweise gerade, abgewinkelt oder gebeugt von der Ausnehmung bis an die Unterseite der Prothesenbasis, b) der Kanal, vorzugsweise gerade, abgewinkelt oder gebeugt von der Ausnehmung bis an eine vestibuläre Seite der Prothesenbasis oder c) der Kanal, vorzugsweise gerade, abgewinkelt oder gebeugt von der Ausnehmung bis an eine linguale Seite der Prothesenbasis verläuft, wobei die Aufweitung (sich zur Ausnehmung hin weitet. Der Kanal dient der Aufnahme eines lösenden, härtenden oder abbindenden Materials zur Verbindung eines künstlichen Zahns mit der Prothesenbasis.

Gemäß der vorliegenden Erfindung wird unter der Prothesenbasis die Prothesenbasis aus Prothesenwerkstoff, das Wachsmodell der eigentlichen Prothesenbasis aus Prothesenwerkstoff oder ein Funktionsmodell aus einem anderen Material verstanden. Die Prothesenbasis bildet die Unterfläche einer abnehmbaren Prothese. Die Prothesenbasis kann auch Teil einer partiellen Prothese, Total- oder Vollprothese, festsitzenden Prothese oder mindestens ein Prothesensattel in einer partiellen Prothese sein.

Da es bei der Herstellung von Teil- oder Totalprothesen in der Regel mehr als nur einen künstlichen Zahn mit der Prothesenbasis zu verbinden gilt, weist diese vorzugsweise mehrere Ausnehmungen auf, wobei weiterhin vorzugsweise die Anzahl der Ausnehmungen der Anzahl der Zähne entspricht. Vorteilhafterweise mündet in jede Ausnehmung ein Kanal, um durch Einbringen eines härtenden oder abbindenden Materials in den Kanal eine stoffschlüssige Verbindung eines in die Ausnehmung eingesetzten künstlichen Zahns mit der Prothesenbasis zu bewirken. Die Prothesenbasis weist demzufolge bevorzugt mehrere solcher Kanäle auf, die sich entlang des Zahnbogens erstrecken. Die Abstände der Kanäle untereinander sind durch die jeweiligen Zahnabstände, insbesondere vorgegeben.

Bevorzugt verläuft der in die Ausnehmung mündende Kanal von der Ausnehmung bis an die Unterseite der Prothesenbasis. Der Kanal bleibt somit auch bei in die Ausnehmung eingesetztem Zahn leicht zugänglich, um das härtende oder abbindende Material einzubringen. Weiterhin bevorzugt verläuft der Kanal gerade, um das Einbringen des härtenden oder abbindenden Materials weiter zu vereinfachen. Zudem kann ein gerade verlaufender Kanal kurz gehalten werden, so dass bei vollständiger Füllung des Kanals mit dem härtenden oder abbindenden Material möglichst wenig Material verbraucht wird. Zugleich fördert ein kurzer Kanal ein schnelles und gleichmäßiges Härten oder Abbinden des Materials. Gleichfalls können die Kanäle jede Geometrie aufweisen, so können die Kanäle auch vorzugsweise vertikal verlaufen aber ebenso kann optional mindestens ein Kanal schräg, abgewinkelt oder gebeugt ausgebildet sein. Die Kanäle können zylindrische Geometrien oder auch polyedrische Geometrie sowie jegliche unregelmäßige Geometrie aufweisen.

Die erfindungsgemäße Prothesenbasis weist auf ihrer Oberseite mindestens eine im Wesentlichen passgenaue Ausnehmung zur bereichsweisen Aufnahme eines künstlichen Zahns auf, vorzugsweise weist die Prothesenbasis bis zu 16 Aufnahmen auf, wobei je Aufnahme in der Prothesenbasis mindestens ein Kanal ausgebildet ist, der in der jeweiligen Ausnehmung mündet, wobei a) der Kanal, vorzugsweise gerade, abgewinkelt oder gebeugt von der Ausnehmung bis an die Unterseite (basal) der Prothesenbasis, b) der Kanal, vorzugsweise gerade, abgewinkelt oder gebeugt von der Ausnehmung bis an eine vestibuläre Seite der Prothesenbasis oder c) der Kanal, vorzugsweise gerade, abgewinkelt oder gebeugt von der Ausnehmung bis an eine linguale Seite der Prothesenbasis verläuft. Somit kann ein erfindungsgemäßer Kanal auf der Unterseite, der vestibulären Seite oder der lingualen Seite der Prothesenbasis eine Öffnung des Kanals aufweisen. Erfindungsgemäß kann jeder Ausnehmung jeweils unabhängig ein durchgehender Kanal mit jeweils einer eigenen Öffnung des Kanals an den vorgennannten Seiten a), b) oder c) zugeordnet sein. Alternativ ebenfalls bevorzugt ist eine Bündelung mindestens zweier Kanäle der vorgenannten Ausnehmungen die in einer gemeinsamen Öffnung an den vorgenannten Seiten a), b) oder c) münden. Somit ist es möglich, dass zwei benachbarte künstliche Zähne in die jeweils passende Ausnehmung eingesteckt werden und die stoffschlüssige Verbindung mittels eines härtenden oder abbindenden Materials, das über eine gemeinsame vorzugsweise vestibulär angeordnete Öffnung eingebracht wurde, erfolgen kann. Um mögliche Reizungen der Schleimhaut zu vermeiden sowie eine perfekte Passung und damit gute Haftung der Prothesenbasis zu gewährleisten, kann die Oberfläche der Prothesenbasis im Bereich der Öffnung der ursprünglichen Kanäle nachbehandelt, insbesondere poliert, werden. Somit können mit dem erfindungsgemäßen Verfahren auch die auf der Gingiva des Unterkiefers und der Gingiva des Oberkiefers anliegenden und für eine gute Haftung der Prothesenbasis zuständigen äußeren Oberflächen der Prothesenbasis nach einer Alternative ohne Öffnungen der Kanäle hergestellt werden. Die zur Schleimhaut (Gingiva) gewandte Seite der Prothesenbasis ist für den Zahntechniker aufgrund der notwendigen sehr passgenauen Geometrie zur Adaption an die Schleimhaut ein Bereich, den er bislang nicht mit Öffnungen versehen hat. Vorzugsweise werden alle mit abgebundenem Material verschlossenen Öffnungen nachbearbeitet, insbesondere poliert, um die Adaption der Prothesenbasis an die Schleimhaut optimal zu gewährleisten. Somit ist eine homogene und reizarme Oberfläche der Prothesenbasis auch auf der Unterseite, vestibulär oder lingual gewährleistet.

Vorteilhafterweise mündet der Kanal im Wesentlichen mittig in Bezug auf die Ausnehmung in die Ausnehmung. Dies stellt einen ausreichenden Abstand des Kanals zu den Randbereichen der Ausnehmung sicher, so dass ein Übertreten des härtenden oder abbindenden Materials über einen Randbereich der Ausnehmung verhindert wird. Bei Verwendung von flüssigem Wachs als härtendes oder abbindendes Material ist dadurch zudem sichergestellt, dass die Randbereiche der Ausnehmung nicht mit angeschmolzen werden, sondern fest bleiben, um die Passgenauigkeit der Ausnehmung zu erhalten.

Alternativ oder ergänzend wird vorgeschlagen, dass der Kanal zumindest im Bereich seiner Mündung in die Ausnehmung eine Aufweitung besitzt. Die Aufweitung schafft ein zusätzliches Volumen, das mit dem härtenden oder abbindenden Material gefüllt werden kann, um den Kontaktbereich des Materials mit dem künstlichen Zahn zu vergrößern und demzufolge die Haftung zu verbessern. Es ist in diesem Fall nicht erforderlich, dass auch Material in die Ausnehmung gelangt. Auch diese Maßnahme trägt demnach zum Erhalt der Passgenauigkeit der Ausnehmung bei.

Besonders bevorzugt kann das härtende oder abbindende Material neben einer stoffschlüssigen Verbindung eine formschlüssige zwischen der Prothesenbasis und dem künstlichen Zahn herstellen, so dass der Zahn auch mechanisch in der Prothesenbasis fixiert wird. Dies ist beispielsweise möglich, indem die Prothesenbasis und/oder der künstliche Zahn Hinterschneidungen aufweisen in die das abbindende oder härtende Material im nicht ausgehärteten Zustand einfließen kann. Gegenstand der Erfindung ist daher auch eine Prothese, insbesondere ein künstlicher Zahn mit mindestens einer Vertiefung und/oder Hinterschneidung an seiner Außenkontur. Besonders bevorzugt ist ein künstlicher Zahn mit mindestens einer Vertiefung oder Hinterschneidung an der Außenkontur im krestalen bis zum apikalen Bereich des künstlichen Zahns. Die mindestens eine Vertiefung und/oder Hinterschneidung ist daher vorzugsweise an der Außenkontur zervikal, und/oder radikulär und/oder apikal vorgesehen. Die Hinterschneidungen sind vorzugsweise länglich, gewellt, sind eine Profilierung oder weisen jegliche Geometrie auf, wobei die mindestens eine Hinterschneidung mindestens um 1°, vorzugsweise um 5°, von der Zahnmittelachse geneigt ist. Sinn der Hinterschneidung ist eine bessere Verankerung beim Verkleben mit der Prothesenbasis. Somit kann auch die Prothesenbasis in der mindestens einen Ausnehmung mindestens eine Hinterschneidung aufweisen, um eine zusätzliche mechanische Verankerung mit den Zähnen nach dem Härten des Materials zu ermöglichen. Die Vertiefung oder Hinterscheidung kann profiliert, als Lumen oder als statistisches oder regelmäßiges Muster von Vertiefungen und/oder Hinterschneidungen ausgebildet sein. Die Vertiefung und/oder Hinterschneidungen befinden sich im basalen Bereich der Prothese, die in der Prothesenbasis angeordnet ist und später nicht sichtbar sein wird.

Ein Prothesensattel ist bei Zahnprothesen der Teil der Prothese, der dem Kieferknochen aufliegt. Die erfindungsgemäßen Kanäle weisen vorzugsweise in der Prothesenbasis eine definierte Anordnung auf, in der der mindestens eine Kanal im Bereich des Prothesensattels der Prothesenbasis ausgebildet ist und, insbesondere mindestens einen Teil eines Zahnbogens nachbilden. Vorzugsweise sind 1, 2, 3, 4, 5, 6, 8, 9,10, 16, 20, 28 bis zu 50, insbesondere sind 1 bis 10, bis 14 oder 16 Kanäle im Prothesensattel der Prothesenbasis angeordnet.

Die Passgenauigkeit der Ausnehmung kommt vorzugsweise dadurch zum Ausdruck, dass die Ausnehmung eine Innenkontur besitzt, die zumindest bereichsweise der Außenkontur des künstlichen Zahns angepasst ist. Da der künstlichen Zahn in der Regel über seinen basalen Bereich mit der Prothesenbasis verbunden wird, entspricht vorzugsweise die Innenkontur der Ausnehmung der Außenkontur des basalen Bereichs des künstlichen Zahns. Besonders bevorzugt ist die Ausnehmung derart an die Außenkontur des künstlichen Zahnes angepasst, dass eine formschlüssige, kraftschlüssige oder stoffschlüssige Fügung der Prothesenbasis und der künstlichen Zähne ermöglicht wird.

Besonders bevorzugt ist die Prothesenbasis mittels eines CAD/CAM-Verfahrens gefertigt worden. Die Fertigung mittels eines CAD/CAM-Verfahrens ermöglicht in einfacher Weise die Ausbildung einer passgenauen Ausnehmung in der Prothesenbasis, in welche dann später der künstliche Zahn eingesetzt wird. Weiterhin bevorzugt ist der Fertigung der Prothesenbasis mittels eines CAD/CAM-Verfahrens eine virtuelle Zahnaufstellung vorausgegangen. Hierbei wird mindestens ein vorkonfektionierter künstlicher Zahn, der als Datensatz vorliegt, in ein virtuelles Modell eingepasst, so dass eine besonders hohe Passgenauigkeit der in der Prothesenbasis zur Aufnahme des Zahns vorgesehenen Ausnehmung erzielbar ist. Denn die Innenkontur der Ausnehmung der Prothesenbasis entspricht in diesem Fall exakt der Außenkontur des künstlichen Zahns im jeweiligen Verbindungsbereich.

Die virtuelle Zahnaufstellung bietet zudem die Möglichkeit, die Lage und Größe des Kanals festzulegen, so dass der Kanal zusammen mit der Prothesenbasis gefertigt werden kann. Unabhängig davon, ob der Fertigung der Prothesenbasis eine virtuelle Zahnaufstellung vorausging, ist es jedoch auch möglich, den Kanal nachträglich einzubringen. Hierzu kann die vorzugsweise mittels eines CAD/CAM-Verfahrens hergestellte Prothesenbasis in einem nachfolgenden Arbeitsschritt mit Kanälen perforiert werden.

Idealerweise besitzt die passgenaue Ausnehmung der Prothesenbasis eine maximale Maßabweichung von 100 µm, vorzugsweise 50 µm, weiterhin vorzugsweise von 30 µm in Bezug auf eine entsprechende Ausnehmung eines Abformmodells oder eines virtuellen Modells.

Die erfindungsgemäße Prothesenbasis kann mit einer Gaumenplatte, vorzugsweise für eine Oberkieferprothese, ausgebildet sein oder derart ausgebildet sein, dass der Sublingualbereich extendiert ist, wie vorzugsweise bei einer Unterkieferprothese.

Als Prothesenwerkstoff eignet sich insbesondere ein Kunststoff, wie polymerisierbare dentale Kunststoffe. Vorzugsweise werden übliche polymerisierbare Prothesenmaterialien, wie sie beschrieben sind in EP1702633B1, DE19617876, EP2529762, zur Herstellung der Prothesenbasis verwendet. Die Prothesenbasis basiert dann auf den auspolymerisierten Prothesenbasismaterialien als Prothesenwerkstoff. Ein mögliches Prothesenbasismaterial umfasst eine polymerisierbare, insbesondere autopolymerisierende oder kaltpolymerisierende oder heißpolymerisierbare oder strahlenhärtbare Zusammensetzung, die (A) eine flüssige Monomerkomponente, (B) eine pulverförmige Komponente, insbesondere umfassend PMMA, (C) mindestens einen Initiator oder ein Initiatorsystem für die Polymerisation enthält. Ferner können die Komponenten (A) oder/und (B) mindestens ein Mitglied der Gruppen der aliphatischen Urethanacrylats und/oder der alphatischen Urethanmethacrylate umfassen.

Bei dem ferner zur Lösung der eingangs genannten Aufgabe vorgeschlagenen Verfahren zur stoffschlüssigen Verbindung eines künstlichen Zahns mit einer Prothesenbasis, wird eine Prothesenbasis verwendet, die insbesondere ganz oder teilweise aus einem Prothesenwerkstoff und/oder aus Wachs gefertigt ist. Ferner weist die Prothesenbasis auf ihrer Oberseite mindestens eine im Wesentlichen passgenaue Ausnehmung zur bereichsweisen Aufnahme eines künstlichen Zahns auf. Erfindungsgemäß wird die stoffschlüssige Verbindung mittels eines härtenden oder abbindenden Materials hergestellt, das in einen in der Prothesenbasis ausgebildeten Kanal eingebracht wird, der in die Ausnehmung mündet, so dass das Material in Kontakt mit dem in die Ausnehmung eingesetzten oder noch einzusetzenden künstlichen Zahn gelangt, wobei der Kanal zumindest im Bereich seiner Mündung in die Ausnehmung eine Aufweitung besitzt, wobei a) der Kanal, vorzugsweise gerade, abgewinkelt oder gebeugt von der Ausnehmung bis an die Unterseite der Prothesenbasis, b) der Kanal, vorzugsweise gerade, abgewinkelt oder gebeugt von der Ausnehmung bis an eine vestibuläre Seite der Prothesenbasis oder c) der Kanal, vorzugsweise gerade, abgewinkelt oder gebeugt von der Ausnehmung bis an eine linguale Seite der Prothesenbasis verläuft, wobei die Aufweitung sich zur Ausnehmung konisch hin weitet.

Somit ist Gegenstand der Erfindung auch eine Prothese erhältlich nach dem erfindungsgemäßen Verfahren.

Der Kanal kann vollständig oder nur teilweise mit dem lösenden, härtenden oder abbindenden Material gefüllt werden. Im letztgenannten Fall ist sicherzustellen, dass zumindest der Mündungsbereich des Kanals mit dem Material gefüllt wird, so dass der zur stoffschlüssigen Verbindung erforderliche Kontakt zum Zahn hergestellt wird bzw. herstellbar ist. Mit dem Härten oder Abbinden des Materials wird dann die stoffschlüssige Verbindung bewirkt.

Beim Einbringen des lösenden, härtenden oder abbindenden Materials in den Kanal gelangt kein oder nur sehr wenig Material in die Ausnehmung, so dass die Passgenauigkeit der Ausnehmung erhalten bleibt und eine Nachbearbeitung des Zahns und/oder der Prothesenbasis nicht mehr erforderlich ist. Auf diese Weise kann die Verbindung des künstlichen Zahns mit der Prothesenbasis schnell und einfach bewirkt werden.

Ob beim Einbringen in den Kanal das härtende oder abbindende Material auch in die Ausnehmung gelangt, hängt unter anderem von der Viskosität des Materials ab. Vorzugsweise wird ein sehr niedrigviskoses härtendes oder abbindendes Material zur stoffschlüssigen Verbindung verwendet. Denn dann vermag das Material in einen Spalt zwischen einem bereits eingesetzten künstlichen Zahn und der Prothesenbasis einzudringen, so dass der Kontaktbereich des Materials mit dem Zahn vergrößert wird. Der vergrößerte Kontaktbereich verbessert die Haftung, so dass eine sichere Verbindung des künstlichen Zahns mit der Prothesenbasis gegeben ist. Ferner bleibt die Passgenauigkeit der Ausnehmung erhalten.

Eine Vergrößerung des Kontaktbereiches kann alternativ oder ergänzend dadurch erreicht werden, dass der Kanal eine Aufweitung in seinem Mündungsbereich besitzt. Die Ausnehmung kann in diesem Fall gänzlich frei von dem härtenden oder abbindenden Material bleiben, so dass die Passgenauigkeit der Ausnehmung unverändert erhalten bleibt.

Gemäß einer bevorzugten Alternative wird die Prothesenbasis in einem CAD/CAM-Verfahren hergestellt und mit dem mindestens einen Kanal versehen.

Das härtende oder abbindende Material wird vorzugsweise nach dem Einsetzen des künstlichen Zahns in die Ausnehmung der Prothesenbasis in den Kanal eingebracht. Der bereits eingesetzte Zahn verhindert, dass mehr härtendes oder abbindendes Material als erwünscht in die Ausnehmung gelangt. Denn in den vom Zahn beanspruchten Raum vermag kein Material mehr vorzudringen. Die Passgenauigkeit bleibt demzufolge erhalten. Als vorteilhaft stellt sich dabei die Verwendung eines sehr niedrigviskosen härtenden oder abbindenden Materials dar, da dieses in einen etwaigen verbleibenden Spalt zwischen dem künstlichen Zahn und der Prothesenbasis vorzudringen vermag, um diesen zu füllen.

Zwischen dem Zahn und der Prothesenbasis verbleiben demnach keine Hohlräume, was im Hinblick auf die Reinhaltung der Prothese wünschenswert ist. Mit dem Eindringen des härtenden oder abbindenden Materials in einen Spalt zwischen dem Zahn und der Prothesenbasis wird zugleich der Bereich der Flächenhaftung vergrößert.

Alternativ kann das härtende oder abbindende Material auch vor dem Einsetzen des Zahns in die Ausnehmung der Prothesenbasis in den Kanal eingebracht werden. Sollte dabei mehr Material als erwünscht über den Kanal in die Ausnehmung gelangen, kann überschüssiges Material beim Einsetzen des Zahns in die Ausnehmung zurück in den Kanal gedrückt werden. Diese Vorgehensweise gewährleistet eine optimale Benetzung des künstlichen Zahns mit dem härtenden oder abbindenden Material und damit eine gute Haftung. Auch in diesem Fall wird die Verwendung eines sehr niedrigviskosen härtenden oder abbindenden Materials bevorzugt, wie vorzugsweise polymerisierbare Monomere, Lösemittel oder Gemische dieser.

Idealerweise erfolgt das Einbringen des härtenden oder abbindenden Materials stets von der Unterseite der Prothesenbasis, wobei es sich bei der Unterseite um die Seite der Prothesenbasis handelt, die der die Ausnehmung aufweisenden Oberseite abgewandt ist. Der Kanal bleibt auf diese Weise selbst dann zugänglich, wenn der künstliche Zahn bereits in die Ausnehmung eingesetzt ist.

Gemäß einer bevorzugten Ausführungsform der Erfindung wird das härtende oder abbindende Material mittels einer Injektionsvorrichtung in den Kanal eingebracht. Diese erlaubt eine genau dosierte Einbringung des Materials. Ferner kann mittels der Injektionsvorrichtung das Material präzise platziert werden, indem beispielsweise eine Applikationsnadel der Injektionsvorrichtung in den Kanal eingeführt wird. Die Einbringung des härtenden oder abbindenden Materials kann auf diese Weise auf einen lokal begrenzten Bereich des Kanals beschränkt werden, so dass es nicht erforderlich ist, den gesamten Kanal mit dem Material zu füllen.

Alternativ kann das härtende oder abbindende Material in den Kanal eingepresst werden. Hierzu kann beispielsweise die Prothesenbasis in ein Bett mit dem härtenden oder abbindenden Material eingedrückt werden, so dass sich der Kanal vollständig mit dem härtenden oder abbindenden Material füllt.

Bei dem härtenden oder abbindenden Material handelt es sich vorzugsweise um einen Klebstoff. Dies gilt insbesondere, wenn es den künstlichen Zahn mit einer Prothesenbasis aus einem Prothesenwerkstoff zu verbinden gilt. Aus der Zahntechnik sind bereits zahlreiche Klebstoffe bekannt, die bei dem vorgeschlagenen Verfahren einsetzbar sind. Besonders eignen sich Klebstoffe auf der Basis spezieller Monomere, wie polymerisierbare Monomere, insbesondere basierend auf Acrylaten oder verflüssigtes Wachs, das als härtendes oder abbindendes Material (4) verwendet wird.

Bei der Verbindung eines künstlichen Zahns mit einer Wachsbasis findet vorzugsweise verflüssigtes Wachs als härtendes oder abbindendes Material Einsatz. Das Wachs wird zur Verflüssigung erwärmt und in den Kanal der Wachsbasis eingebracht. Das erwärmte Wachs führt dabei zum Anschmelzen des Wachses der Wachsbasis im Bereich des Kanals, d. h. auch im Mündungsbereich des Kanals in die Ausnehmung. Dies trägt dazu bei, dass der Bereich der Flächenhaftung vergrößert und demzufolge eine verbesserte Haftung erzielt wird. Der Bereich der durch das zur Verflüssigung erwärmte Wachs angeschmolzen wird sollte jedoch auf einen Bereich um die Mitte der Ausnehmung beschränkt bleiben, um die Passgenauigkeit der Ausnehmung sicherzustellen. Das heißt, dass die Randbereiche der Ausnehmung, die der Fassung des künstlichen Zahns dienen, vorzugsweise nicht angeschmolzen bzw. erweicht werden, um deren passgenaue Form zu erhalten. Um dies zu erreichen, ist zumindest der Mündungsbereich des Kanals im Wesentlichen mittig in Bezug auf die Ausnehmung angeordnet.

Eine mittige Anordnung wirkt sich ebenfalls vorteilhaft bei Verwendung eines Klebstoffs zur stoffschlüssigen Verbindung des künstlichen Zahns mit der Prothesenbasis aus. Denn die mittige Anordnung, vorzugsweise am Grund der Ausnehmung, verhindert, dass etwaiger überschüssiger Klebstoff über die Randbereiche der Ausnehmung tritt. Dies gilt insbesondere, wenn erst der Klebstoff eingebracht und anschließend der Zahn in die Ausnehmung eingesetzt wird.

Bevorzugte Ausführungsformen einer erfindungsgemäßen Prothesenbasis werden nachfolgend anhand der beigefügten Zeichnungen näher erläutert. Ferner wird anhand der Zeichnungen das erfindungsgemäße Verfahren unter Verwendung einer erfindungsgemäßen Prothesenbasis erläutert. Die Zeichnungen zeigen:
- Fig. 1: einen schematischen Querschnitt durch eine erfindungsgemäße Prothesenbasis,
- Fig. 2: eine schematische Draufsicht auf die Prothesenbasis der Fig. 1,
- Fig. 3: den Querschnitt der Fig. 1 mit in die Prothesenbasis eingesetzten künstlichen Zähnen während der stoffschlüssigen Verbindung mittels einer Injektionsvorrichtung und
- Fig. 4: den Querschnitt der Fig. 1 mit in die Prothesenbasis eingesetzten künstlichen Zähnen während der stoffschlüssigen Verbindung mittels Eindrücken in ein Materialbett.
- Fig. 5: stellt eine Prothesenbasis nach dem Stand der Technik dar, die vorzugsweise entsprechend mit den erfindungsgemäßen Ausnehmungen 3 und Kanälen versehen werden kann.
- Fig. 6: stellt eine Prothesenbasis mit zwei beispielhaften Kanälen 5 dar, die bis auf die vestibuläre Seiten der Prothesenbasis verlaufen und dort ihre jeweilige Kanalöffnung aufweisen.

### Ausführliche Beschreibung der Zeichnungen

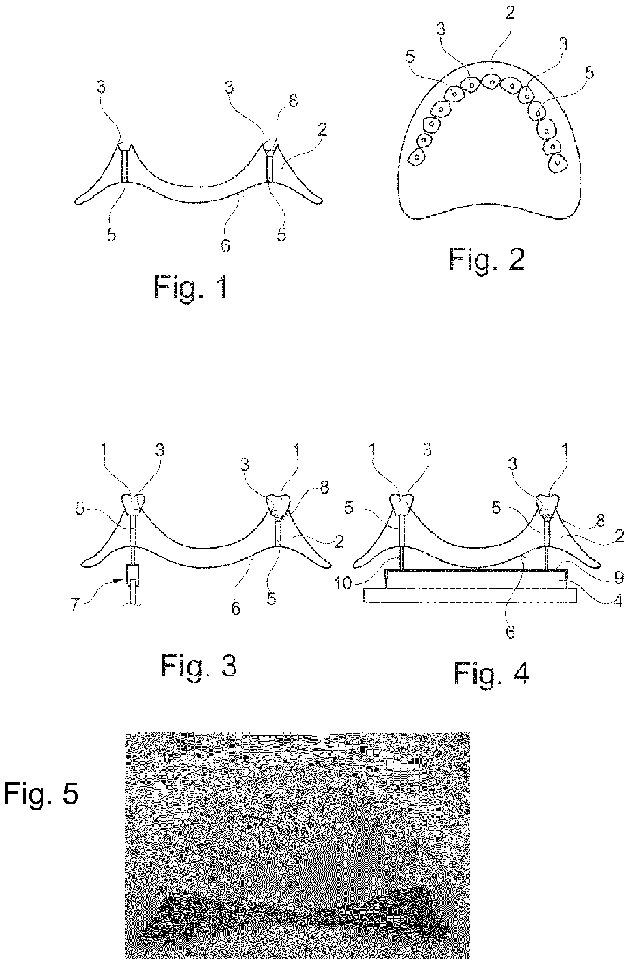

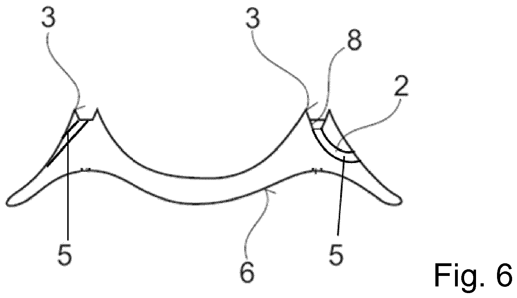

Die in der Fig. 1 schematisch im Querschnitt dargestellte Prothesenbasis 2 aus Kunststoff wurde auf der Grundlage einer virtuellen Zahnaufstellung mittels eines CAD/CAM-Verfahrens hergestellt. Sie weist eine gewölbte Unterseite 6 auf, welche vorliegend der Oberkiefersituation des Patienten angepasst ist. Die Oberseite besitzt Ausnehmungen 3, die jeweils der Aufnahme eines künstlichen Zahns 1 dienen (siehe Fig. 3 und 4). Die Innenkontur der Ausnehmungen 3 ist der Außenkontur des jeweils aufzunehmenden künstlichen Zahns 1 angepasst. Die Ausnehmungen 3 stellen demnach passgenaue Sitze für die einzusetzenden künstlichen Zähne 1 dar. In die Ausnehmungen 3 mündet im Wesentlichen mittig jeweils ein Kanal 5, welcher der Aufnahme eines härtenden oder abbindenden Materials 4 zur stoffschlüssigen Verbindung des künstlichen Zahns 1 mit der Prothesenbasis 2 dient. Bei dem Material 4 kann es sich insbesondere um einen Klebstoff handeln. Die Kanäle 5 verlaufen jeweils gerade, wie vertikal, schräg, abgewinkelt oder gebeugt, bevorzugt gerade vom Grund der jeweiligen Ausnehmung 3 bis zur Unterseite 6 der Prothesenbasis 2, so dass es möglich ist, das härtende oder abbindende Material 4 von der Unterseite her in den jeweiligen Kanal 5 einzubringen. Figur 6 stellt entsprechend bis auf die vestibulären Seiten der Prothesenbasis verlaufende Kanäle 5 dar. Entsprechend einer besonders bevorzugten Alternative verläuft der mindestens eine Kanal 5, vorzugsweise gerade, abgewinkelt oder gebeugt von der Ausnehmung 3 bis an eine vestibuläre Seite der Prothesenbasis 2, wie in Figur 6 dargestellt. Somit endet der mindestens eine Kanal 5 nach dieser Alternative vorzugsweise im Bereich der Wange oder Lippe in der Prothesenbasis. Nach dem Einbringen des abbindenden Materials 4 und dem Aushärten des Materials kann die ursprüngliche vestibuläre Öffnung des Kanals nachbearbeitetet, insbesondere poliert, werden, um eine homogene reizarme Oberfläche der Prothesenbasis an dieser Position zu gewährleisten. Entsprechend wird mit ursprünglich auf der Unterseite vorhandenen und verfüllten Öffnungen verfahren.

Wie beispielhaft auf der rechten Seite der Zeichnung der Fig. 1 dargestellt kann der Kanal 5 im Bereich seiner Mündung in die Ausnehmung 3 eine Aufweitung 8 besitzen. Die Aufweitung 8 ist vorliegend konisch geformt und weitet sich zur Ausnehmung 3 hin. Beim Einbringen des härtenden oder abbindenden Materials 4 in den Kanal 5 wird der Bereich der Aufweitung 8 vollständig mit dem Material 4 gefüllt. Dadurch vergrößert sich der Kontaktbereich des Materials 4 mit dem in die Ausnehmung 3 eingesetzten künstlichen Zahn 1, so dass eine noch bessere Haftung erzielt wird.

In der Fig. 2 ist eine stark vereinfachte Draufsicht der Prothesenbasis 2 der Fig. 1 dargestellt. Die Draufsicht zeigt die Ausnehmungen 3 und die im Wesentlichen mittig in die Ausnehmungen 3 mündenden Kanäle 5. Wie der Fig. 2 zu entnehmen sind die Ausnehmungen 3 einschließlich der Kanäle 5 entlang dem Zahnbogen angeordnet.

Um einen künstlichen Zahn 1 mit der Prothesenbasis 2 zu verbinden kann wie in der Fig. 3 dargestellt vorgegangen werden. Zunächst wird der künstliche Zahn 1 in die passgenaue Ausnehmung 3 der Prothesenbasis 2 eingesetzt. Anschließend wird über den zugeordneten Kanal 5 mittels einer Injektionsvorrichtung 7 das härtende oder abbindende Material 4 eingebracht. Die Injektionsvorrichtung 7 wird hierzu in den Kanal 5 eingeführt, so dass sichergestellt ist, dass das Material 4 in Kontakt mit dem künstlichen Zahn 1 gelangt. Beim Einbringen des Materials 4 in den Kanal 5 wird dann die Injektionsvorrichtung herausgezogen, so dass sich der Kanal 5 vollständig mit dem Material 4 füllt.

Alternativ kann wie in der Fig. 4 dargestellt vorgegangen werden. Hier wird die Prothesenbasis 2 mit den hierin eingesetzten künstlichen Zähnen 1 gegen eine Platte 9 mit röhrchenförmigen Applikatoren 10 gedrückt, die dabei in die Kanäle 5 eintauchen. Unterhalb der Platte 9 befindet sich das härtende oder abbindende Material 4, das durch die Bewegung der Prothesenbasis 2 und der Platte 9 nach unten über die Applikatoren 10 in die Kanäle 5 gedrückt bzw. gepresst wird. Sind die Kanäle 5 vollständig mit dem Material 4 gefüllt, wird die Prothesenbasis 2 wieder abgenommen.

Eine nicht dargestellt, aber weitere Variante zum stoffschlüssigen Verbinden der künstlichen Zähne 1 mit der Prothesenbasis 2 stellt das unmittelbare Eindrücken der Prothesenbasis 2 in ein Bett aus dem härtenden oder abbindenden Material 4 dar. In diesem Fall ist kein Werkzeug zum Einbringen des Materials 4 in einen Kanal 5 erforderlich. An der Unterseite 6 der Prothesenbasis 2 haften bleibendes Material 4 muss dann jedoch ggf. nachträglich entfernt werden.

### Bezugszeichenliste

- 1: künstlicher Zahn
- 2: Prothesenbasis
- 3: Ausnehmung
- 4: härtendes oder abbindendes Material
- 5: Kanal
- 6: Unterseite der Prothesenbasis
- 7: Injektionsvorrichtung
- 8: Aufweitung
- 9: Platte
- 10: Applikator

## Patentansprüche

1. Prothesenbasis, die auf ihrer Oberseite mindestens eine im Wesentlichen passgenaue Ausnehmung (3) zur bereichsweisen Aufnahme eines künstlichen Zahns (1) besitzt, **dadurch gekennzeichnet, dass** in der Prothesenbasis (2) mindestens ein Kanal (5) ausgebildet ist, der in die Ausnehmung (3), mündet und der Kanal (5) zumindest im Bereich seiner Mündung in die Ausnehmung (3) eine Aufweitung (8) besitzt, wobei a) der Kanal (5), vorzugsweise gerade, abgewinkelt oder gebeugt, von der Ausnehmung (3) bis an die Unterseite (6) der Prothesenbasis (2), b) der Kanal (5), vorzugsweise gerade, abgewinkelt oder gebeugt, von der Ausnehmung (3) bis an eine vestibuläre Seite der Prothesenbasis (2) oder c) der Kanal (5), vorzugsweise gerade, abgewinkelt oder gebeugt, von der Ausnehmung (3) bis an eine linguale Seite der Prothesenbasis (2) verläuft, wobei die Aufweitung (8) sich zur Ausnehmung (3) konisch hin weitet.

2. Prothesenbasis nach Anspruch 1, **dadurch gekennzeichnet, dass** der Kanal (5) im Wesentlichen mittig in Bezug auf die Ausnehmung (3) in die Ausnehmung (3) mündet.

3. Prothesenbasis nach einem der Ansprüche 1 bis 2, **dadurch gekennzeichnet, dass** die Ausnehmung (3) eine Innenkontur besitzt, die zumindest bereichsweise der Außenkontur des künstlichen Zahns (1) angepasst ist.

4. Prothesenbasis nach einem der Ansprüche 1 bis 3, **dadurch gekennzeichnet, dass** die Prothesenbasis (2) mittels eines CAD/CAM-Verfahrens gefertigt worden ist.

5. Prothesenbasis nach einem der Ansprüche 1 bis 4, **dadurch gekennzeichnet, dass** sie ganz oder teilweise aus einem Prothesenwerkstoff und/oder aus Wachs gefertigt ist.

6. Prothesenbasis nach einem der Ansprüche 1 bis 5, **dadurch gekennzeichnet, dass** der Prothesenwerkstoff ein Kunststoff- oder ein auspolymerisiertes Prothesenmaterial umfasst, das erhältlich ist durch eine Polymerisation einer flüssigen Monomerkomponente und einer pulverförmige Komponente.

7. Verfahren zur stoffschlüssigen Verbindung eines künstlichen Zahns (1) mit einer Prothesenbasis (2), die auf ihrer Oberseite mindestens eine im Wesentlichen passgenaue Ausnehmung (3) zur bereichsweisen Aufnahme eines künstlichen Zahns (1) besitzt, wobei die stoffschlüssige Verbindung mittels eines härtenden oder abbindenden Materials (4) hergestellt wird, das in einen in der Prothesenbasis (2) ausgebildeten Kanal (5) eingebracht wird, der in die Ausnehmung (3) mündet, so dass das Material (4) in Kontakt mit dem in die Ausnehmung (3) eingesetzten oder noch einzusetzenden künstlichen Zahn (1) gelangt, wobei der Kanal (5) zumindest im Bereich seiner Mündung in die Ausnehmung (3) eine Aufweitung (8) besitzt, wobei a) der Kanal (5), vorzugsweise gerade, abgewinkelt oder gebeugt, von der Ausnehmung (3) bis an die Unterseite (6) der Prothesenbasis (2), b) der Kanal (5), vorzugsweise gerade, abgewinkelt oder gebeugt, von der Ausnehmung (3) bis an eine vestibuläre Seite der Prothesenbasis (2) oder c) der Kanal (5), vorzugsweise gerade, abgewinkelt oder gebeugt, von der Ausnehmung (3) bis an eine linguale Seite der Prothesenbasis (2) verläuft, wobei die Aufweitung (8) sich zur Ausnehmung (3) komisch hin weitet.

8. Verfahren nach Anspruch 7, **dadurch gekennzeichnet, dass** das härtende oder abbindende Material (4) vor oder nach dem Einsetzen des künstlichen Zahns (1) in die Ausnehmung (3) der Prothesenbasis (2) in den Kanal (5) eingebracht wird, wobei vorzugsweise das Einbringen von der Unterseite (6) der Prothesenbasis (2) erfolgt.

9. Verfahren nach Anspruch 7 oder 8, **dadurch gekennzeichnet, dass** das härtende oder abbindende Material (4) mittels einer Injektionsvorrichtung (7) in den Kanal (5) eingebracht wird.

10. Verfahren nach Anspruch 8 oder 9, **dadurch gekennzeichnet, dass** das härtende oder abbindende Material (4) in den Kanal (5) eingepresst wird.

11. Verfahren nach einem der Ansprüche 7 bis 10, **dadurch gekennzeichnet, dass** ein Klebstoff, polymerisierbare Monomere, oder verflüssigtes Wachs als härtendes oder abbindendes Material (4) verwendet wird.

12. Prothese erhältlich nach einem Verfahren nach einem der Ansprüche 7 bis 11.

13. Wachsmodell **dadurch gekennzeichnet, dass** es in Form einer Prothesenbasis nach einem der Ansprüche 1 bis 5 vorliegt.

## Claims

1. Prothesis base which has at least one substantially custom-fit recess (3) on its top side for zonally receiving an artificial tooth (1), **characterised in that** at least one conduit (5) is formed in the prothesis base opening out into the recess (3), and the conduit (5) has a widening (8) a least in the region of its opening into the recess (3), a) the conduit (5) running, preferably straight, angled or bent, from the recess (3) up to the bottom side (6) of the prosthesis base (2), b) the conduit (5) running, preferably straight, angled or bent, from the recess (3) up to a vestibular side of the prosthesis base (2), or c) the conduit (5) running, preferably straight, angled or bent, from the recess (3) up to a lingual side of the prosthesis base (2), the widening (8) widening conically towards the recess (3).

2. Prothesis base according to claim 1, **characterised in that** the conduit (7) opens out into the recess (3) substantially centrally with respect to the recess (3).

3. Prosthesis base according to any one of the claims 1 to 2, **characterised in that** the recess (3) has an inner contour which is adapted to the outer contour of the artificial tooth (1) at least over regions.

4. Prosthesis base according to any one of the claims 1 to 3, **characterised in that** the prothesis base (2) has been manufactured by means of a CAD/CAM process.

5. Prosthesis base according to any one of the claims 1 to 4, **characterised in** being manufactured, totally or partially, from a prosthesis material and/or from wax.

6. Prosthesis base according to any one of the claims 1 to 5, **characterised in that** the prosthesis material comprises a plastic or polymerised prosthetic material which is obtainable by polymerisation of a liquid monomer component and a powdered component.

7. Method for substance-to-substance connection of an artificial tooth (1) with a prosthesis base (2) which has at least one substantially custom-fit recess (3) for receiving an artificial tooth (1) on its top side, the substance-to-substance connection being established by means of a curing or setting material (4) being introduced into a conduit formed in the prosthesis base (2) which opens out into the recess (3) such that the material (4) gets into contact with the artificial tooth (1) inserted or still to be inserted into the recess (3), the conduit (5) having a widening (8) a least in the region of its opening into the recess (3), a) the conduit (5) running, preferably straight, angled or bent, from the recess (3) up to the bottom side (6) of the prosthesis base (2), b) the conduit (5) running, preferably straight, angled or bent, from the recess (3) up to a vestibular side of the prosthesis base (2), or c) the conduit (5) running, preferably straight, angled or bent, from the recess (3) up to a lingual side of the prosthesis base (2), the widening (8) widening conically towards the recess (3).

8. Method according to claim 7, **characterised in that** the curing or setting material (4) is introduced into the conduit (5) before or after the insertion of the artificial tooth (1) into the recess (3) of the prosthesis base (2), the insertion preferably being carried out from the bottom side (6) of the prothesis base (2).

9. Method according to claim 7 or 8, **characterised in that** the curing or setting material (4) is introduced into the conduct (5) by means of an injection device (7).

10. Method according to claim 8 or 9, **characterised in that** the curing or setting material (4) is pressed into the conduct (5).

11. Method according to any one of the claims 7 to 10, **characterised in that** an adhesive, polymerisable monomers, or liquefied wax is used as curing or setting material (4).

12. Prothesis obtainable according to a method according to any one of the claims 7 to 11.

13. Wax model, **characterised in** being present in the form of a prothesis base according to any one of the claims 1 to 5.

## Revendications

1. Base de la prothèse qui a sur sa partie supérieure au moins un évidement (3) substantiellement sur mesure pour recevoir par zones une dent artificielle (1), **caractérisée en ce que** au moins un conduit (5) est formé dans la base de la prothèse débouchant dans l'évidement (3), et le conduit (5) a un élargissement (8) au moins dans la région de son embouchure dans l'évidement (3), a) le conduit (5) passant, de préférence droit, angulaire ou plié, de l'évidement (3) jusqu'à la partie inférieure (6) de la base de la prothèse (2), b) le conduit (5) passant, de préférence droit, angulaire ou plié, de l'évidement (3) jusqu'à la partie vestibulaire de la base de la prothèse (2), ou c) le conduit (5) passant, de préférence droit, angulaire ou plié, de l'évidement (3) jusqu'à la partie linguale de la base de la prothèse (2), l'élargissement (8) élargissant coniquement vers l'évidment (3).

2. Base de la prothèse selon la revendication 1, **caractérisée en ce que** le conduit (7) débouche dans l'évidement (3) substantiellement centriquement par rapport à l'évidement (3).

3. Base de la prothèse selon l'une des revendications 1 à 2, **caractérisée en ce que** l'évidement (3) a un contour intérieur qui est adapté au contour extérieur de la dent artificielle au moins en régions.

4. Base de la prothèse selon l'une des revendications 1 à 3, **caractérisée en ce que** la base de la prothèse (2) a été fabriquée au moyen d'un procédé CAO/FAO.

5. Base de la prothèse selon l'une des revendications 1 à 4, **caractérisée** en étant fabriquée, totalement ou partiellement, d'un matériau de prothèse et/ou de la cire.

6. Base de la prothèse selon l'une des revendications 1 à 5, **caractérisée en ce que** le matériau de prothèse comprend un matériau prothétique plastique ou polymérisé qui est obtenable par la polymérisation d'un composant monomère liquide et un composant pulvérulent.

7. Procédé pour une liaison matière-à-matière d'une dent artificielle (1) avec une base de la prothèse (2) qui a au moins un évidement (3) substantiellement sur mesure pour recevoir une dent artificielle (1) sur sa partie supérieure, la liaison matière-à-matière est établie au moyen d'un matériau durcissant ou de prise (4) étant introduit dans un conduit (5) formé dans la base de la prothèse (2) qui débouche dans l'évidement (3) de sorte que le matériau (4) prend contact avec la dent artificielle (1) insérée ou encore à être insérée dans l'évidement (3), le conduit (5) ayant un élargissement (8) au moins dans la région de son embouchure dans l'évidement (3), a) le conduit (5) passant, de préférence droit, angulaire ou plié, de l'évidement (3) jusqu'à la partie inférieure (6) de la base de la prothèse (2), b) le conduit (5) passant, de préférence droit, angulaire ou plié, de l'évidement (3) jusqu'à la partie vestibulaire de la base de la prothèse (2), ou c) le conduit (5) passant, de préférence droit, angulaire ou plié, de l'évidement (3) jusqu'à la partie linguale de la base de la prothèse (2), l'élargissement (8) s'élargissant coniquement vers l'encoche (3).

8. Procédé selon la revendication 7, **caractérisé en ce que** le matériau durcissant ou de prise (4) est introduit dans le conduit (5) avant ou après l'insertion de la dent artificielle (1) dans l'évidement (3) de la base de la prothèse (2), l'insertion de préférence étant effectuée de la partie inférieure (6) de la base de la prothèse.

9. Procédé selon la revendication 7 ou 8, **caractérisé en ce que** le matériau durcissant ou de prise (4) est introduit dans le conduit (5) au moyen d'un dispositif d'injection.

10. Procédé selon la revendication 8 ou 9, **caractérisé en ce que** le matériau durcissant ou de prise (4) est pressé dans le conduit (5).

11. Procédé selon l'une des revendications 7 à 10, **caractérisé en ce qu'**un adhésif, des monomères polymérisables, ou de la cire liquéfiée est utilisé en tant qu'un matériau durcissant ou de prise (4).

12. Prothèse obtenable selon le procédé selon l'une des revendications 7 to 11.

13. Modèle en cire, caractérisé en étant présent sous forme d'une base de la prothèse selon l'une des revendications 1 à 5.
